# EUROPEAN PATENT SPECIFICATION

(11) **EP 1 670 221 B1**
(45) Date of publication and mention of the grant of the patent: **17.03.2010**
(21) Application number: 05024439.1
(22) Date of filing: 09.11.2005
(51) Int. Cl.: H04M 1/60, H04M 1/725

(54) **Receiver position optimizing device for mobile communication terminal and method thereof**
Vorrichtung und Verfahren zur Optimierung der Lautsprecherposition eines mobilen Kommunikationsendgerätes
Procédé et dispositif d'optimisation de la position du haut parleur d'un terminal mobile

(30) Priority: 09.12.2004 KR 2004103831
(43) Date of publication of application: 14.06.2006
(73) Proprietor: LG Electronics Inc., Seoul 150-721 (KR)
(72) Inventor: Cho, A-Seo, Secho-Gu Seoul (KR)
(74) Representative: Beyer, Andreas

(56) References cited:
- EP-A- 1 445 922
- WO-A-03/103175

## Description

### BACKGROUND OF THE INVENTION

### 1. Field of the Invention

The present invention relates to a mobile communication terminal, and more particularly, to a receiver position optimizing device for a mobile communication terminal capable of optimizing a position of a receiver for outputting a call sound by using a detection unit for detecting a user's ear hole.

### 2. Description of the Background Art

A service provider of a mobile communication terminal provides functions relevant to communication functions such as a wireless internet access, a video on demand (VoD) service, a text and multimedia message transmission, a wireless on-line game, etc. to a user. Also, a manufacturing company of a mobile communication terminal provides functions that are not relevant to communication functions such as a camera, an MP3, a memo writing, a schedule management, a morning call, etc. to the user.

In order to implement the functions provided at the mobile communication terminal, the mobile terminal has to be provided with a speaker for outputting a voice file such as an MP3, a receiver for converting a received signal into a voice signal by demodulation and outputting the signal, and a microphone for demodulating a voice signal into a data signal. When the user is to perform a calling by using the mobile communication terminal having the receiver and the microphone, the user contacts the receiver to his ear to hear a voice signal outputted from the mobile communication terminal. When the user speaks, the content is demodulated into a data signal by the microphone and then is outputted from a receiver provided at a counter party's mobile communication terminal as a voice signal.

However, the related art receiver has the following problems. Since the related art receiver is fixed at a certain position of the mobile communication terminal, the user has to hold the mobile communication terminal with his hand and contact the receiver to his ear in order to hear a voice signal outputted from the receiver. During this process, the user's ear hole is not aligned with a direction of the receiver, and thereby the user can not hear a voice signal outputted from the receiver. Therefore, the user has to perform a calling with paying attention so that the receiver can be aligned with his ear hole.

EP-A-1 445 922 discloses a mobile phone with a proximity sensor built into the phone in the vicinity of the ear piece and pointing towards the head and ear of a user. The proximity sensor detects when the phone is held close to the body by evaluating infrared light reflected from the surface of the user's head and by appropriately controlling speaker volume.

WO-A-03/103175 discloses a mobile communication device including an extended array sensor. The array sensor can sense a change in field and accordingly adjust a parameter of operation of the mobile communication device based on the change in field across the array sensor in response to a conductive profile.

### BRIEF DESCRIPTION OF THE INVENTION

Therefore, an object of the present invention is to provide a mobile communication terminal capable of controlling a position of a receiver of the mobile communication terminal by a detection unit.

To achieve these and other advantages and in accordance with the purpose of the present invention, as embodied and broadly described herein, there is provided a mobile communication terminal having the features set out in claim 1.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a perspective view showing a position of a receiver for a mobile communication terminal according to the present invention;
FIG. 2 is a block diagram showing a receiver position optimizing device according to the present invention; and
FIG. 3 is a flowchart showing a method for optimizing a position of a receiver for a mobile communication terminal according to the present invention.

### DETAILED DESCRIPTION OF THE INVENTION

Reference will now be made in detail to the preferred embodiments of the present invention, examples of which are illustrated in the accompanying drawings.

Hereinafter, a preferred embodiment of the present invention will be explained with reference to the attached drawings.

A basic concept of the present invention is to provide a mobile communication terminal capable of conveniently performing a calling regardless of a position of a receiver by controlling a direction of the receiver in correspondence with a user's ear hole.

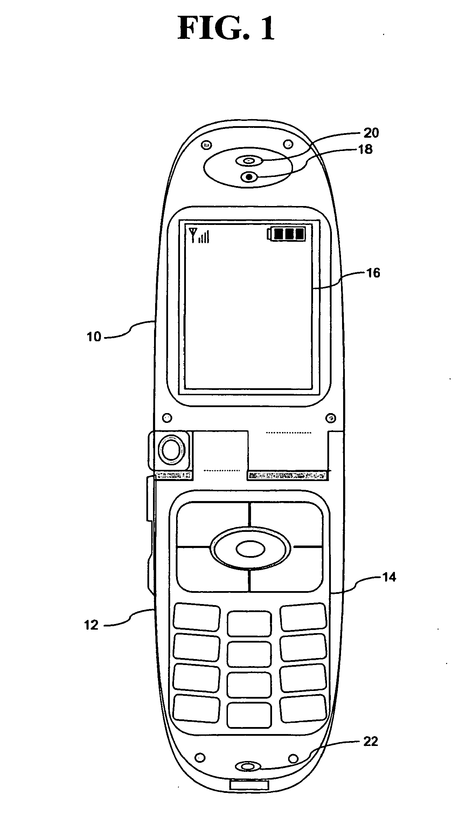

FIG. 1 is a perspective view showing a position of a receiver for a mobile communication terminal according to the present invention.

As shown, a mobile communication terminal according to the present invention comprises a body 12 having basic calculation functions, a display module 16, and a cover 10 having a detecting unit 18 and a receiver 20.

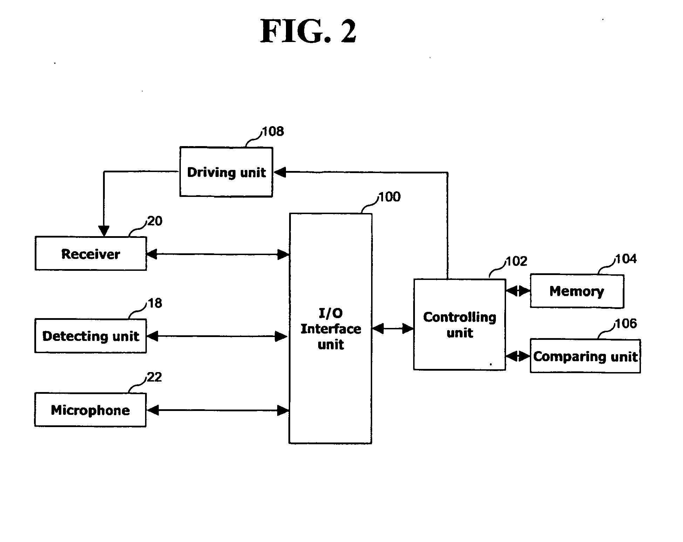

FIG. 2 is a block diagram showing a receiver position optimizing device according to the present invention.

As shown, a receiver position optimizing device for a mobile communication terminal comprises a detecting unit 18 for detecting a position of ear hole based on feature of the ear hole, a controlling unit for extracting a characteristic parameter based on feature of the ear hole and comparing the characteristic parameter with standard parameter related to a normal feature of the ear hole, a memory 104 for storing the extracted characteristic parameter, a comparing unit 106 for comparing the characteristic parameter with average data of a general user's ear hole stored in the memory, a receiver 20 for controlling an output direction of a voice signal by the controlling unit, and a driving unit 108 for controlling a direction of the receiver by the controlling unit.

Hereinafter, an operation of the device for optimizing a position of a receiver of a mobile communication terminal according to the present invention will be explained with reference to FIG. 2.

When a user contacts a receiver of a mobile communication terminal having a detecting unit (e.g. a distance measuring sensor, an image recognizing sensor, etc.) to his ear during a calling or a non-calling, the detecting unit (e.g. a distance measuring sensor) measures a distance of the user's ear hole. Then, the detecting unit transmits the measured value to the controlling unit 102 through an I/O interface unit 100. The controlling unit analyzes the measured value by a thresholding method or a noise reduction method, thereby extracting a characteristic parameter of the ear hole. Then, the controlling unit transmits the extracted parameter to the controlling unit, and stores it in the memory 104 where average data relevant to characteristic parameters of general users' ear holes are stored.

That is, the memory stores a table for showing the average data, and the table stores the extracted characteristic parameter of the user's ear hole. The average data is updated with the extracted characteristic parameter.

The controlling unit transmits the average data of the ear hole stored in the memory to the comparing unit, and transmits a parameter value extracted from a distance value measured by the distance measuring sensor to the comparing unit 106. The comparing unit compares the two values by the controlling unit, and then transmits a difference value between the two values to the controlling unit 102. The controlling unit 102 controls the receiver in correspondence with a characteristic of the user's ear hole in upper, lower, right, and left directions by using the difference value. If the user performs a calling, a voice signal is outputted to a direction of the receiver controlled by the driving unit.

The process is applied when the user performs a calling or when the user does not perform a calling.

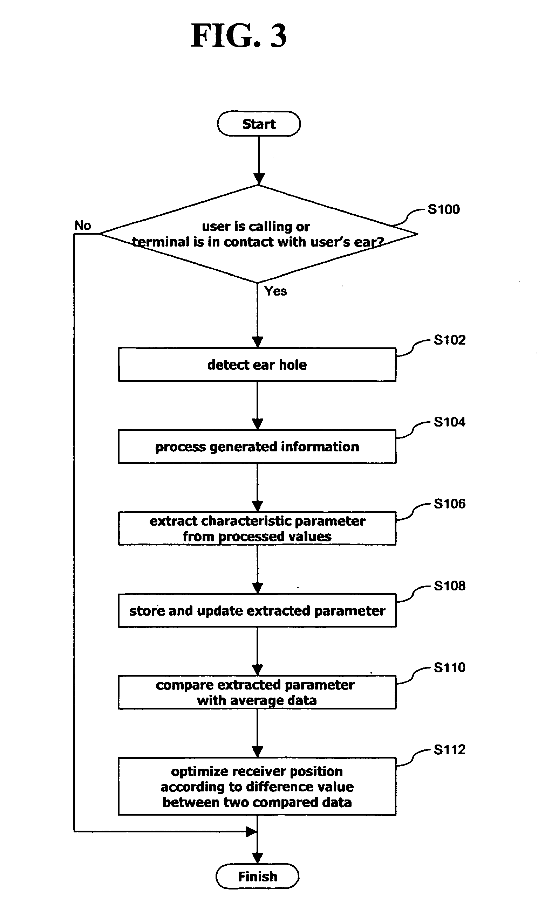

FIG. 3 is a flowchart showing a method for optimizing a position of a receiver for a mobile communication terminal according to the present invention.

Hereinafter, a method for optimizing a position of a receiver according to the present invention will be explained with reference to FIG. 3.

If the user contacts the receiver to his ear during a calling or a non-calling by using a mobile terminal having a distance measuring sensor, the distance measuring sensor near the receiver detects the user's ear hole (S100). Then, the distance measuring sensor generates information including the detected characteristic parameter of the user's ear hole (S102). The generated information is processed by a thresholding method for converting an analogue image into a digital image and a noise reduction method for filtering the digital image (S104).

The controlling unit extracts a characteristic parameter for optimizing a position of a receiver from the processed values. According to the extracted characteristic parameter, a position of the receiver is determined. Therefore, a characteristic parameter has to be extracted precisely by reducing an error range (S106). The controlling unit transmits the extracted parameter and the average data of the characteristic parameters of general users' ear holes stored in a storing unit (e.g. a memory) to the comparing unit. Also, the controlling unit stores the extracted parameter in a storing unit (e.g. a memory), and updates the average data with the extracted parameter (S108).

The comparing unit compares the extracted parameter with the average data, thereby detecting a position of the user's ear hole having a similar characteristic to the average data (S110). The comparing unit transmits a difference value between the two compared data to the controlling unit, and the controlling unit controls a position of the receiver by the difference value by the driving unit, thereby optimizing the position of the receiver at the user's ear hole (S108).

As aforementioned, the present invention provides a mobile communication terminal capable of optimizing a position of a receiver by a detecting unit for real time detecting a position of a user's ear hole near the receiver. Therefore, the user can perform a calling without paying attention to the position of the receiver.

Furthermore, in the present invention, a distance of the user's ear hole is measured by a distance measuring sensor provided at the mobile communication terminal, and an image is photographed by an image recognizing sensor provided at the mobile communication terminal. The measured distance or photographed information is analyzed, thereby automatically optimizing the position of the receiver.

As the present invention may be embodied in several forms without departing from essential characteristics thereof, it should also be understood that the above-described embodiments are not limited by any of the details of the foregoing description, unless otherwise specified, but rather should be construed broadly as defined in the appended claims, and therefore all changes and modifications that fall within the metes and bounds of the claims, or equivalence of such metes and bounds are therefore intended to be embraced by the appended claims.

## Claims

1. A mobile communication terminal, comprising:
- a detecting unit (18) for detecting a position information of an ear hole based on a feature of the ear hole;
- a controlling unit (102) for extracting a characteristic parameter based on the feature of the ear hole;
- a memory (104) for storing standard parameter data related to a normal feature of the ear hole;
- a comparing unit (106) for comparing the characteristic parameter with the standard parameter data;
- a receiver (20) adapted to change an output direction of a voice signal; and
- a driving unit (108) for controlling the output direction of the receiver (20) under control of the controlling unit (102).

2. The terminal of claim 1, wherein the memory (104) is adapted to store the extracted parameter and the standard parameter data.

3. The terminal of claim 1, further comprising means for processing the detected position information of ear hole by a thresholding method or a noise reduction method, and for transmitting the processed information to the controlling unit (102).

4. The terminal of claim 1, wherein the detecting unit (18) comprises a distance measuring sensor for measuring a distance or an image recognizing sensor for photographing an image.

5. The terminal of claim 1, wherein the driving unit (108) is adapted to move the receiver (20) in upper, lower, right, and left directions.

6. The terminal of claim 1, wherein when the extracted characteristic parameter is inputted to the controlling unit (102), the standard parameter is updated with the inputted parameter.

7. The terminal of claim 1, wherein the comparing unit (106) is adapted to compare the extracted parameter with the standard parameter of the characteristic parameters of users' ear holes, and to transmit a difference value between the two data to the controlling unit (102).

8. The terminal of claim 7, wherein the controlling unit (102) is adapted to position the receiver (20) at a user's ear hole according to the difference value by driving the driving unit (108).

## Patentansprüche

1. Mobiles Kommunikationsendgerät, mit:
- einer Erfassungseinheit (18) zum Ermitteln von Positionsinformationen einer Ohröffnung basierend auf einem Merkmal der Ohröffnung,
- einer Steuereinheit (102) zum Extrahieren eines charakteristischen Parameters basierend auf dem Merkmal der Ohröffnung,
- einem Speicher (104) zum Speichern von sich auf ein normales Merkmal der Ohröffnung beziehende Standardparameterdaten,
- einer Vergleichseinheit (106) zum Vergleichen der charakteristischen Parameter mit den Standardparameterdaten,
- einem Empfänger (20), der eine Ausgaberichtung eines Sprachsignals zu verändern vermag, und
- einer Ansteuereinheit (108) zum Steuern der Ausgaberichtung des Empfängers (20) unter der Steuerung der Steuereinheit (102).

2. Endgerät nach Anspruch 1, bei der der Speicher (104) die extrahierten Parameter und die Standardparameterdaten zu speichern vermag.

3. Endgerät nach Anspruch 1, das ferner Einrichtungen zum Verarbeiten der ermittelten Positionsinformationen der Ohröffnung mittels eines Schwellwertverfahrens oder eines Rauschunterdrückungsverfahrens und zum Senden der verarbeiteten Informationen an die Steuereinheit (102) umfasst.

4. Endgerät nach Anspruch 1, bei dem die Erfassungseinheit (18) einen Abstandsmesssensor zum Messen eines Abstands oder einen Bilderkennungssensor zum Fotografieren eines Bildes umfasst.

5. Endgerät nach Anspruch 1, bei dem die Ansteuereinheit (108) den Empfänger (20) in eine obere, untere, rechte und linke Richtung zu bewegen vermag.

6. Endgerät nach Anspruch 1, bei dem beim Eingeben der extrahierten charakteristischen Parameter in die Steuereinheit (102) die Standardparameter durch die eingegebenen Parameter aktualisiert werden.

7. Endgerät nach Anspruch 1, bei dem die Vergleichseinheit (106) die extrahierten Parameter mit den Standardparametern der charakteristischen Parameter von Benutzerohröffnungen zu vergleichen und einen Differenzwert zwischen den zwei Daten an die Steuereinheit (102) zu senden vermag.

8. Endgerät nach Anspruch 7, bei dem die Steuereinheit (102) den Empfänger (20) an der Ohröffnung eines Benutzers zu positionieren vermag durch Ansteuern der Ansteuereinheit (108) entsprechend dem Differenzwert.

## Revendications

1. Terminal de communication mobile comprenant :
- une unité de détection (18) destinée à détecter une information de position d'un orifice d'oreille sur la base d'une propriété de l'orifice d'oreille ;
- une unité de commande (102) destinée à extraire un paramètre caractéristique sur la base de la propriété de l'orifice d'oreille ;
- une mémoire (104) destinée à stocker des données de paramètre classique se rapportant à une propriété normale de l'orifice d'oreille ;
- une unité de comparaison (106) destinée à comparer le paramètre caractéristique avec les données de paramètre classique ;
- un récepteur (20) conçu pour modifier une direction de sortie d'un signal vocal ; et
- une unité d'entraînement (108) destinée à commander la direction de sortie du récepteur (20) sous le contrôle de l'unité de commande (102).

2. Terminal selon la revendication 1, dans lequel la mémoire (104) est conçue pour stocker le paramètre extrait et les données de paramètre classique.

3. Terminal selon la revendication 1, comprenant en outre des moyens pour traiter l'information de position détectée d'orifice d'oreille à l'aide d'un procédé de seuillage ou d'un procédé de réduction de bruit, et pour transmettre l'information traitée à l'unité de commande (102).

4. Procédé selon la revendication 1, dans lequel l'unité de détection (18) comprend un capteur de mesure de distance destiné à mesurer une distance ou un capteur de reconnaissance d'image destiné à photographier une image.

5. Procédé selon la revendication 1, dans lequel l'unité d'entraînement (108) est conçue pour déplacer le récepteur (20) dans les directions vers le haut, vers le bas, vers la droite et vers la gauche.

6. Terminal selon la revendication 1, dans lequel lorsque le paramètre caractéristique extrait est appliqué à l'entrée de l'unité de commande (102), le paramètre classique est mis à jour avec le paramètre appliqué en entrée.

7. Terminal selon la revendication 1, dans lequel l'unité de comparaison (106) est conçue pour comparer le paramètre extrait avec le paramètre classique des paramètres caractéristiques des orifices d'oreilles d'utilisateurs, et pour transmettre une valeur de différence entre les deux données à l'unité de commande (102).

8. Terminal selon la revendication 1, dans lequel l'unité de commande (102) est conçue pour positionner le récepteur (20) au niveau d'un orifice d'oreille d'utilisateur en fonction de la valeur de différence, en entraînant l'unité d'entraînement (108).
